# EUROPEAN PATENT APPLICATION

(11) **EP 4 817 854 A1**
(43) Date of publication of application: **07.10.2026**
(21) Application number: 25167716.7
(22) Date of filing: 01.04.2025
(51) Int. Cl.: B29C 70/38, B29C 70/32, B29K 101/12

(54) **METHOD AND DEVICE FOR MANUFACTURING AN OBJECT FROM AT LEAST ONE PRE-PRODUCT**

(71) Applicant: fiberior GmbH, 67663 Kaiserslautern (DE)
(72) Inventor: DONHAUSER, Tobias, 67433 Neustadt an der Weinstraße (DE)
(74) Representative: Fuchs Patentanwälte Partnerschaft mbB

(57) **Abstract**

The present disclosure relates to a method of manufacturing an object from at least one pre-product (2) comprising at least one polymer and at least one fiber arrangement, wherein the pre-product (2) is provided in form of a tape, sheet or ribbon, and to a device (1) comprising a support (3), a heating device (5), a placing unit (6) having an optional consolidation unit (7), and a discharge unit (8) configured to provide the at least one pre-product (2), wherein at least the heating device (5) is displaceable relative to the support (3).

The problem to solve is to provide a method which allows a corresponding device (1) to be sturdy and having a high degree of design options.

This problem is solved by a method and a device (1) using an LED-arrangement (20) as heating device (5)

## Description

The present disclosure relates to a method of manufacturing an object from at least one pre-product comprising at least one polymer and at least one fiber arrangement, wherein pre-product is in form of a tape, sheet or ribbon.

### Background of the Disclosure

Methods and devices for manufacturing objects from pre-products utilize different methods such as pressing, winding and fiber placement processes.

In a pressing process, the pre-product in tape form is heated and placed in a press. The press applies pressure to the pre-product and solidifies it to an object. The heat can be introduced via a heated pressing tool or infrared radiation.

In a winding and fiber placement processes, the pre-product is heated and placed in layers onto a support to form an object. Both processes require a heat source to melt the tape shortly before it is deposited. Such a heat source utilizes gas, lasers, xenon light, induction or infrared radiation.

Heating by gas allows a good heat introduction. However, this method is difficult to control because the flame temperature is difficult to regulate. Furthermore, heating by gas might result in a reaction between the gas and the polymer, such that the structural integrity of the object might not be up to the desired standard.

Heating by laser is easy to control. However, the laser requires an extensive periphery and safety equipment and further requires high acquisition costs. Moreover, the pre-product must be adapted to the laser. Accordingly, the pre-product is typically black to have a good absorption of the laser light.

Induction depends on inductive materials, such as carbon fiber. Accordingly, this process is limited to such materials.

Infrared radiation is cost effective. However, it has a low power output. The higher the power, the lower the controllability, which leads to large setups and difficult function integration.

### Brief Summary of the Disclosure

In a first aspect, the present disclosure relates to a method of manufacturing an object from at least one pre-product comprising at least one polymer and at least one fiber arrangement, wherein pre-product is in form of a tape, sheet or ribbon.

In a second aspect, the present disclosure relates to a device configured to laminate at least one pre-product onto a support and/or to a base layer, wherein the base layer is formed of laminated pre-product.

The method comprises the following steps:
a) placing a first layer of pre-product on a support, forming a base layer
b) placing a second layer of pre-product onto the base layer, such that the second layer at least partially overlaps with the first layer,
c) introducing heat, such that at least a portion of the polymer(s) of the first layer and/or of the second layer melts at least before the first and the second layer meet,
d) pressing the applied second layer to the first layer, optionally, by means of a consolidation unit, and solidifying the applied second layer to the first layer, becoming a part of the base layer.

Further, the method comprises the following optional steps:
e1) placing a third layer of pre-product onto the base layer, wherein the third layer overlaps the first layer and/or the second layer and/or an outermost layer,
e2) introducing heat, such that at least a portion of the polymer(s) of the base layer and/or the third layer melts at least before the base layer and the third layer meet,
e3) pressing the applied third layer to the base layer, optionally, by means of a consolidation unit, and solidifying the applied third layer to the base layer, becoming a part of the base layer,
e4) repeating steps e1) to e3) for one or more further layers.

Such a method can be used or performed in combination with a corresponding device having
- a support,
- a heating device,
- a placing unit having an optional consolidation unit, and a discharge unit configured to provide at least one pre-product,
wherein at least the heating device is displaceable relative to the support.

Generally speaking, the object manufactured by said method, respectively said device, is formed of at least two layers of pre-product. A first layer is provided to the support, wherein the support at least partially determines the geometric characteristics of the object. The support is for example formed of a bar or tube, for example being rotationally symmetric and/or having a convex shape, in particular a circular, or an elliptical shape. A shape of the bar or tube might vary along its length. In case the support is a bar or a tube, the support can be configured to rotate about its longitudinal axis, such that the pre-product is wound about the support. Alternatively, the support is formed of a substrate having a form of a desired shape. The pre-product is placed on the substrate layer by layer.

Regardless of the shape of the support, adjoining layers, e.g. the base layer and the second or third layer, are placed to at least partially overlap each other, wherein the adjoining layers are bonded in their overlapping areas. The bonding process may be considered a welding process, wherein at least the base layer and/or a subsequent layer are at least partly heated to a melting temperature at least before these two layers meet. Additionally, the point of first contact of the base layer and the subsequent layer can be also heated.

After the layers meet, the latest applied layer is pressed to the base layer. For example, in the case of the support being a substrate or a non-rotationally symmetric body, the latest applied layer can be pressed to the base layer by a consolidation unit, e.g. a consolidation wheel. In the case of the support being rotationally symmetric, e.g. a bar or tube, the latest applied layer can be placed to the base layer under tension. Alternatively, or in addition to the placement under tension, a consolidation unit can provide further pressing force.

Methods and devices for laminating pre-products onto a support and/or to a base layer having a laser device for heating require a suitable laser device periphery in terms of optical fibers and optics. Such a periphery is fragile and needs to be handled with care. Furthermore, the periphery limits the design options of the device, as the minimum radii of the optical fibers, for example, must be observed.

Thus, the problem of the present disclosure is to provide improved methods and devices, including devices having a high degree of design options.

This objective is solved by a method having the features of claim 1, wherein the heat input is provided by an LED-arrangement.

The LED-arrangement is formed of at least one light emitting diode (LED), which provides radiation capable of heating the first layer, the second layer, the third layer and/or the base layer, in particular mating areas of respective layers. Such an LED-arrangement requires little space and has a high degree of design options, since additional periphery e.g. optical fibers or the like can be omitted. As a result, the provided method is sturdy and has a high degree of design options.

Mating areas relate to areas provided on the pre-product and/or the base layer. The mating areas are configured to be placed on each other in order to be bonded to each other.

Furthermore, the above-described problem is solved by a device comprised of a support, a heating device, a placing unit having an optional consolidation unit, and a discharge unit configured to provide the at least one pre-product, at least the heating device is displaceable relative to the support. The heating device comprises an LED-arrangement wherein the LED-arrangement is formed of at least one light emitting diode (LED). The at least one LED is configured to provide a heat input to a radiation zone, and wherein the radiation zone is provided at the pre-product and/or the base layer when the device is in operation.

The device is configured to laminate at least one pre-product onto a support and/or to a base layer, wherein the base layer is formed of laminated pre-product, wherein the at least one pre-product comprises at least one polymer and at least one fiber arrangement, wherein the device comprises a support, a heating device, a placing unit having an optional consolidation unit, and a discharge unit configured to provide the at least one pre-product, wherein the heating device is displaceable relative to the support, wherein the heating device comprises an LED-arrangement wherein the LED-arrangement is formed of at least one light emitting diode (LED), wherein the at least one LED is configured to provide a heat input to a radiation zone, and wherein the radiation zone is provided at the pre-product and/or the base layer when the device is in operation. The pre-product might not be part of the device. Nevertheless, the device is capable of processing said pre-product to objects.

As already described in the outset, the device is configured to process the pre-product to form a base layer, wherein the base layer comprises at least partly the form of the support. To do so, the discharge unit provides the pre-product to a placing unit. In a first step, the placing unit places the pre-product onto a support forming a first layer, respectively the base layer. In a subsequent step, further pre-product is placed via the placing unit onto the base layer, configured to form the second layer. The second layer and the base layer are placed to at least partly overlap with each other. To bond the pre-product and the base layer with each other, the heating device heats at least the base layer and/or the pre-product to a melting temperature. When at least either of the base layer and the pre-product in particular their mating areas reaches the melting temperature, the pre-product is placed onto the base layer, forming a second layer and becoming part of the base layer. After the second layer and the base layer are bonded, the second layer is solidified to the base layer, optionally by using the consolidation unit. The melting temperature may be a temperature within a melting range of the polymer.

The heating device is formed of an LED-arrangement having at least one LED, which is configured to provide a heat input to the radiation zone. The radiation zone corresponds to an area of the base layer and/or pre-product, which is irradiated by the LED-arrangement. Said radiation zone is fixed relatively to the LED-arrangement, however it is displaceable relatively to the support. The radiation zone and the radiation zone may coincide.

The LED-arrangement, in particular its LEDs, can be arranged close to an area desired to be heated, which are the mating areas of the pre-product and/or the base layer. This allows a good efficiency of heating the pre-product and/or the base layer. In this context "close" means less than 200 mm, preferably less than 100 mm, or less than 50 mm. In some embodiments, the distance between the LED-arrangement and the area to be heated is in the range of from 10 mm to 50 mm, such as from 10 mm to 30 mm.

### Detailed Description of the Disclosure

In an embodiment, the LED-arrangement heats the base layer in a radiation zone corresponding to the placement of the third layer of the pre-product and/or wherein the LED-arrangement heats the pre-product. The LED-arrangement heats the radiation zone of the base layer, wherein the radiation zone may be fixed relative to the LED-arrangement, while the radiation zone is displaceable relative to the base layer. The radiation zone is matched to a placement of the third layer, such that the radiation zone is heated to its melting temperature when the third layer is placed onto the base layer. As the base layer moves relative to the LED-arrangement, the radiation zone is also displaced relatively to the base layer. In other words, the radiation zone and mating areas of the pre-product and/or the base layer coincide. This allows a continuous process, wherein the LED-arrangement and its radiation zone moves relatively to the base layer, such that the third layer of the pre-product can be placed in a continuous manner.

Additionally, or alternatively, the LED-arrangement heats the pre-product to a melting temperature, in which the pre-product and the base layer bond with each other. By providing heat input to solely one of the base layer or to the pre-product, the LED-arrangement can be formed smaller compared to an LED-arrangement heating both, the base layer and the pre-product. Furthermore, it might be sufficient to solely heat a mating area of the base layer or the pre-product to provide a proper bonding.

The term "mating area", also referred to as "nip-point", relates to areas provided on the pre-product and/or the base layer. The mating areas are configured to be placed on each other in order to be bonded to each other. During the solidification process, the mating areas are interconnected.

In another embodiment, the LED-arrangement heats the pre-product or the base layer to a melting temperature which allows bonding to the other layer, while the other layer is heated to a temperature below the melting temperature. This allows a combination of a small LED-arrangement, since just one of the pre-product and the base layer needs to be heated to the melting temperature.

The melting temperature corresponds to a temperature or a temperature range that at least one of the base layer and the pre-product in form of the second and/or third layer must have so that the base layer and the pre-product can be bonded. Said melting temperature may correspond to or exceed a temperature within a melting range of one or more polymers contained in the pre-product. For example, the melting temperature relates to a temperature at which the pre-product and the base layer can be welded.

In a useful embodiment, the LED-arrangement is equipped with LEDs and controlled accordingly to properties of the pre-product and/or base layer, in particular according to (light-) absorption characteristics of base layer and/or pre-product, thickness of base layer and/or pre-product, width of base layer and/or pre-product, and/or temperatures of base layer and/or pre-product. Other properties of the pre-product and/or base layer, such as thermal conductivity, thickness distribution over a cross-section of the pre-product and/or of the base layer, and/or position of the placement of the pre-product in relation to the object, might be also taken into account when controlling the LED-arrangement. By considering at least one of the previously mentioned characteristics of the base layer and/or the pre-product, the LED-arrangement and/or its LEDs can be controlled to achieve good bonding between the base layer and the pre-product. For example, a thick pre-product may require a higher amount of heat than a thin pre-product, and/or when bonding a pre-product having a small width to the base layer, it is sufficient to heat a corresponding small area of the base layer. Furthermore, a required heat input depends on the temperature of the base layer and the pre-product, whereby a low ambient temperature requires a greater heat input than a high ambient temperature.

In one embodiment, a controller controls the LED-arrangement and/or at least one of the LEDs. Accordingly, variations in width or thickness of the pre-product, wherein for example, a heat input can be reduced in an edge region of the pre-product, can be taken into account. In some embodiments, the individual LEDs within the LED arrangement can be controlled independently in a "pixel-like" manner.

The LED-arrangement and its characteristics, e.g. emitted wavelength and/or wavelength range, radiation power, radiation zone, may be chosen according to the characteristics of the base layer and/or pre-product. Different materials have different characteristics, in particular different absorption characteristics (also known as absorption spectrums), which can be taken care of by a suitable LED-arrangement. By using LEDs, which are configured to emit a wavelength range corresponding to the absorption characteristics of the pre-product and/or base layer, the heat input can be realized efficiently.

In an embodiment, the emitted wavelength or wavelength range comprises light in the wavelength range from 200 to 600 nm, such as in the blue wavelength range from 400 to 500 nm. The wavelengths have been proven effective for the methods of this disclosure and are commercially available. In some embodiments, a combination of UV light and blue light is used, which may be particularly suitable for PEEK and/or PBS polymers. In some embodiments, UV light is used. As the wavelength can be chosen freely, the pre-product is not limited to a specific absorption spectrum or color. In embodiments, the pre-product is not black and/or does not comprise any carbon powder.

In an embodiment, the polymer of the pre-product is selected form a group consisting of polyethylene (PE), polyamide (PA), polycarbonate (PC), polypropylene (PP), polyether ether ketone (PEEK), polyphenylene sulfide(PPS), polybutylene succinate (PBS) and combinations thereof, and/or the fiber arrangement comprises fibers selected from a group consisting of glass fibers, carbon fibers and/or polymer fibers, wherein optionally the plurality of fibers is oriented in a longitudinal direction within the pre-product. Said polymers and fibers are broadly available and cost effective. In an embodiment, the polymer is polyamide and the fiber arrangement is selected from glass fibers.

Furthermore, the pre-product can be selected from unidirectional tapes (UD-tapes). Such UD-tapes can have a fiber content between 10% by volume and 75% by volume, such as from 30% to 70% by volume, or up to 60% by volume. This allows the production of structurally solid objects.

In an embodiment, the LED-arrangement is formed of at least one LED array, wherein optionally the LED-arrangement is formed of at least a first and a second LED-array, wherein the at least first and second LED-array are separated from each other, wherein the first LED-array comprises a first radiation zone configured to interact with the pre-product, wherein the second LED-array is configured to interact with the base layer. Each of the at least one LED array is formed of several LEDs, wherein the LEDs are arranged in a matrix having columns and rows. This allows heat to be introduced over a large area such that the pre-product and/or the base material is gently heated avoiding negative effects on the polymer.

By using at least the first and the second LED-array, each of the first and the second LED-array can provide heat to radiation zones being separated from each other. For example, the first LED-array focuses on heating the pre-product, while the second LED-array heats the base material. As a result, each of the base layer and pre-product is heated according to its characteristics respectively to preset parameters, resulting in an efficient and effective process.

In an embodiment, each of the at least one LED and/or LED array is individually controllable. For controlling each of the at least one LED and/or LED array individually, the device comprises a controller configured to control the at least one LED of the LED-arrangement and/or LED array. The at least one LED and/or LED array can be for example controlled by using a pulse-width modulation to adapt a heat input. In the case of an LED array, the controller is capable of controlling individual LEDs e.g. using a pulse-width-modulation or other methods alike, to adjust the radiation zone to the width of the pre-product. Furthermore, different deposition speeds of the pre-product can be taken into account by having more or less LEDs providing a heat input.

In an embodiment, the radiation zone has a radiation width and a radiation length, wherein the radiation width and the radiation length are perpendicular to each other, wherein the radiation width is ± 50%, ± 25%, ± 15%, ± 5%, ± 2,5%, or ± 1% of the width of the pre-product, and/or wherein the radiation length is at least 10% of the radiation width, optionally at least 20% of the radiation width, at least 50% of the radiation, at least 100% of the radiation width, at least 200% of the radiation width, or at least 1000% of the radiation width.

The radiation width corresponds to the width (transversal direction) of the pre-product, wherein the radiation length corresponds to a longitudinal direction of the pre-product. By adapting the radiation width to the width of the pre-product, width of different pre-products or pre-products having a varying width can be processed by simply adjusting the radiation width. In embodiments, the radiation zone, in particular the radiation width matches the geometric characteristics of the pre-product, in particular the width of the pre-product.

By adjusting the radiation length, the pre-product and/or the base layer can be heated corresponding to their characteristics. This allows gentle heating or intense heating of the pre-product and/or the base layer just as the pre-product and/or the base layer require.

For instance, the radiation zone can be adjusted by controlling the at least one LED and/or the at least one LED array accordingly. For example, the at least one LED array comprises at least several LEDs being provided in width direction such that at least a part of the width of the pre-product can be irradiated. For example, the radiation width can be formed wide by turning LEDs on, which are arranged in the transversal direction, while by turning said LEDs off, the radiation width can be formed narrow. The radiation length can be controlled in the same way, wherein turning LEDs on in the longitudinal direction extends the radiation length, while turning said LEDs off shortens the radiation length. Furthermore or alternatively, the LED-arrangement, the LED-arrays and/or the LEDs can be controlled with regard to their intensity, e.g. by means of Pulse-width modulation or alike. Thus, the LED arrangement can be adapted easily to different characteristics of the pre-product and/or the base layer.

In an embodiment, the LED-arrangement and/or the LED-array is exchangeable. In case the LED-arrangement and/or the LED-array has a defect, a replacement is easily provided. Furthermore, the LED-arrangement and/or LED-array can be easily adapted for heating different pre-products. Further, for example, the LED-arrangement and/or the LED array can be exchanged without any tools.

In an embodiment, the LED-arrangement has at least one wavelength or wavelength range, wherein the LED-arrangement in particular its wavelength or wavelength range is matched according to an absorption spectrum of the pre-product and/or base layer, in particular to the absorption spectrum of the polymer, the fiber arrangement or any other compound in the pre-product. The LED arrangement and/or the LED array might be formed to emit a certain wavelength range. As a result, such an LED arrangement and/or LED array may be suitable for polymers and/or fibers having high absorption characteristics of this wavelength range. To process different polymers and/or fibers a different LED arrangement and/or a different LED array may be used matching the absorption characteristics of the different polymer and/or fiber. Additionally, different polymers and/or fibers might require a different heat input, wherein each LED-arrangement and/or LED-array might provide certain ranges of heat input.

In an embodiment, the LED-arrangement comprises at least two LEDs emitting differing wavelength and/or wavelength ranges. Thus, the LED-arrangement can be used for different pre-products by utilizing the LEDs emitting a wavelength and/or wavelength range matching the absorption characteristics of the used polymer. In case a different pre-product is used, LEDs having a matching wavelength and/or wavelength range can be turned on, while the LEDs having a wavelength and/or wavelength range differing from the absorption characteristics of the pre-product are turned off.

In one embodiment, the device comprises a controller being configured to control the LED-arrangement and/or at least one of the LED-arrays and/or each of the at least one LED By controlling the LED-arrangement and/or the at least one of the LED-arrays and/or at each of the at least one LED, the radiation provided can be adapted in a pixel-like manner. Furthermore, the LED-arrangement and/or each of the LED-arrays and/or the LEDs can be controlled by means of pulse-width-modulation or methods alike, which are known to the person skilled in the art. Each of the different layers (base layer, first layer, second layer and/or third layer) can be heated according to the corresponding characteristics. In an embodiment, the consolidation unit comprises a consolidation element, e.g. a consolidation wheel. Such a consolidation element presses the newly bonded second or third layer to the base layer to strengthen the bond between the newly applied pre-product and the base layer.

The above-described method and device are capable of producing an object, wherein the object is a tube for gas and fluid transport optionally for pressurized conditions, and/or a can for electric pumps, and/or a drive shaft, and/or a pneumatic cylinder, and/or a hydraulic cylinder, and/or a pressure tank.

### Brief Description of the Drawings

The disclosure is described below in conjunction with the drawing. Herein show:
- Fig. 1: schematically a comparative device, as described in the outset.
- Fig. 2: schematically an embodiment of the present disclosure
- Fig. 3: schematically a structure of an object produced according to the disclosed method.

Identical or similar elements are labelled with the same reference signs.

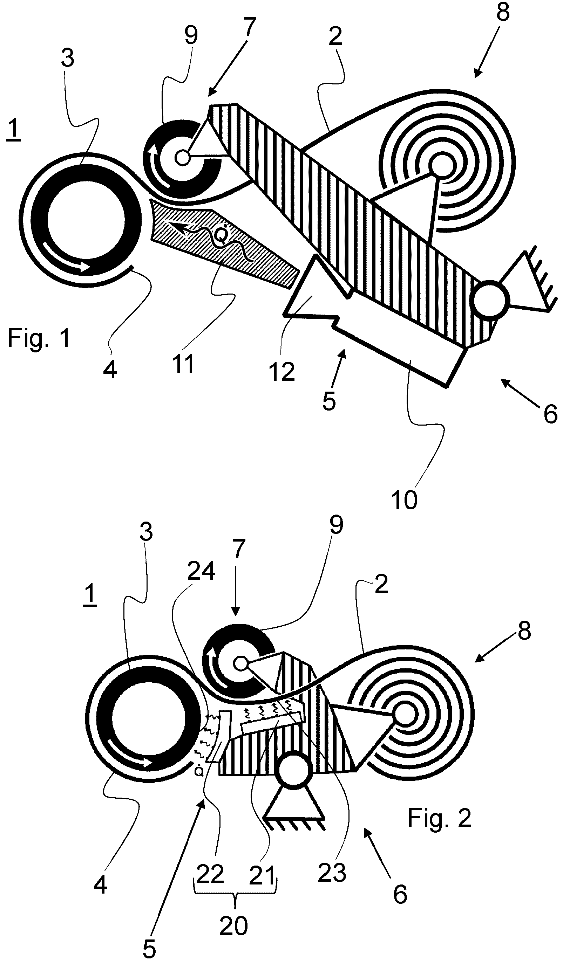

Fig. 1 schematically shows a comparative device 1 which is configured to laminate at least one pre-product 2 onto a support 3 and/or to a base layer 4, wherein the base layer 4 is formed of laminated pre-products 2. The device 1 comprises the support 3, a heating device 5, a placing unit 6 having an optional consolidation unit 7, and a discharge unit 8. The heating device 5 is configured to at least partially heat the pre-product 2 and/or the base layer 4, in particular at least mating areas of at least one of the pre-product 2 and the base layer 4 is heated. The placing unit 6 is configured to place the pre-product 2 onto the base layer 4, wherein the pre-product 2 is pressed to the base layer 4 by means of a consolidation wheel 9 of the consolidation unit 7.

The discharge unit 8 is configured to be equipped with a supply of pre-product 2, such that the discharge unit 8 can provide pre-product 2 to the placing unit 6. The heating device 5 is formed of a laser generator 10 generating a laser beam 11 which is directed by not depicted optical fibers and optics 12 so that the laser beam 11 irradiates mating areas of the pre-product 2 and of the base layer 4. The heated mating areas of the pre-product 2 is placed and pressed to the heated mating areas of the base layer 4 by the consolidation wheel 9. As the support 3 respectively the base layer 2 and the consolidation wheel 9 rotate relatively to each other, the arrows indicate a direction of rotation of the support 3 and of the consolidation wheel 9.

Fig. 2 schematically shows a device 1 according to an embodiment of the present disclosure.

The device 1 is configured to laminate a pre-product 2 to a support 3 and/or to a base layer 4.

The base layer 4 is arranged adjacent to the support 3. The device 1 comprises the support 3, a heating device 5, a placing unit 6 having an optional consolidation unit 7, and a discharge unit 8.

The discharge unit 8 supplies pre-product 2 to the placing unit 6, which places the pre-product 2 onto the support 3 and/or the base layer 4. For this purpose, the placing unit 6 has a not shown guide unit which guides and places the pre-product 2 onto the support 3 and/or the base layer 4.

The first layer is placed directly onto the support 3 forming the base layer 4, wherein following layers are at least partly placed onto the base layer 4, such that the base layer 4 and adjoining layers can be bonded together, e.g. by welding. In other words, the base layer 4 and adjoining layers at least partially overlap with each other.

The heating device 5 is formed of an LED-arrangement 20 having a first LED array 21 and a second LED array 22. The first LED array 21 irradiates a first radiation zone 23 provided at the pre-product 2, while the second LED array irradiates a second radiation zone 24 provided at the base layer 4, such as at the nip-point. The LED arrays 21,22 are provided facing mating faces of the base layer 4 respectively the pre-product 2. Each of the LED arrays 21, 22 comprises several LEDs emitting a wavelength respectively a wavelength range. The heating device 5 further comprises a not depicted controller, which is configured to control the LEDs and/or the LED-arrangement 20 and/or the LED arrays 21, 22.

The LEDs are provided at the LED-arrangement 20 respectively to the first and/or second LED array 21, 22 by means of SMD, surface-mounted-devices, which allows a compact design of the heating device 5.

Further, the LEDs, the LED arrangement 20 and/or the LED-arrays 21, 22 can be replaced. To do so the LEDs, the LED arrangement 20 and/or the LED-arrays 21, 22 which needs to be replaced is removed and another LEDs, the LED arrangement 20 and/or the LED-arrays 21, 22. The replacement process can be performed toolless.

LEDs have a high-power density, such that a small LED-arrangement 20 is able to heat the pre-product 2 and/or the base layer 4 sufficient, while only a small mounting installation space is required.

In another not depicted embodiment, the LED-arrangement 20 comprises a cooling unit, which is configured to cool the LED-arrangement 20. For example, such a cooling unit comprises cooling ribs or an active cooling circuit with coolant, a pump and a radiator. Said active cooling unit can be arranged distanced to the LED-arrangement, for example at the placing unit 6.

The pre-product 2 is formed of at least one polymer and at least one fiber arrangement, wherein the fiber arrangement is embedded within the at least one polymer.

The at least one polymer may be selected from a group consisting of polyethylene (PE), polyamide (PA), polycarbonate (PC), polypropylene (PP), polyether ether ketone (PEEK), polyphenylene sulfide (PPS), polybutylene succinate (PBS) and combinations thereof.

The fiber arrangement may comprise fibers selected from a group consisting of glass fibers, carbon fibers and/or polymer fibers, wherein optionally the plurality of continuous fibers is oriented in a longitudinal direction within the pre-product.

The pre-product may comprise a fiber content of up to 80% by volume respectively up to 60% by volume, preferably between 10% by volume and 75% by volume, preferably about 60% by volume.

Said pre-product 2 is also known as unidirectional tape (UD-tape). The pre-product 2 comprises a length, a width and a thickness, wherein the length corresponds to its longitudinal direction, while the thickness corresponds to the smallest extent. The length, width and thickness are oriented perpendicular to each other. The width of such pre-product 2 is between 10 mm and 50 mm, while the thickness is between 0,1 mm and 0,5 mm and the length can reach up to several thousand meters.

The LEDs respectively their wavelength and/or wavelength range is to be chosen according to the characteristics of the used pre-product. Different kinds of polymers and/or fibers have different absorption characteristics, which can be considered when choosing a suitable LED-type to equip the LED arrangement 20.

For example, ultraviolet wavelengths (UVA 315 nm to 400 nm, UVB 200 nm to 315 nm) are suitable for heating polyamide (PA) and polycarbonate (PC). A wavelength range ranging from ultraviolet (200 nm) to blue (450 nm) is suitable for heating polyether ether ketone (PEEK) and polybutylene succinate (PBS).

By choosing suitable LEDs having suitable wavelengths according to the provided pre-product 2, the pre-product 2 can be free of additives that allow light absorption of wavelengths differing from the ones of the polymer and/or fiber arrangement. By omitting additives, the characteristics of the polymer are not affected by additives. Furthermore, the polymer can have any color desired without being limited to certain absorption characteristics or colors of additives, which allows color coding of the object, and/or its layers.

Furthermore, the radiation zone can be adapted to geometric characteristics of the pre-product 2, such that solely the width of the pre-product 2 is heated. A wider radiation zone compared to the width of the pre-product 2 can be avoided. As a result, the base layer 4 and the pre-product 2 can be precisely heated according to the width of the pre-product 2. This allows a good efficiency and avoids overheating or unnecessary heating of the base layer, product or pre-product.

The LED-arrangement 20 is controlled by the not depicted controller, wherein at least one of the following characteristics is taken into account when controlling the LED-arrangement 20: (light-) absorption characteristics of base layer 4 and/or pre-product 2, thickness of base layer 4 and/or pre-product 2, width of base layer 4 and/or pre-product 2, and/or temperatures of base layer 4 and/or pre-product 2, and/or thermal conductivity of base layer 4 and/or pre-product 2, thickness variation over a cross-section of the pre-product 2 and/or of the base layer 4, sensor output data of a temperature sensor arrangement sensing temperature of the base layer 4 and/or pre-product 2, and/or position of the placement of the pre-product 2 in relation to a finished object.

The temperature sensor arrangement provides sensor output data to determine the temperature of the base layer 4 and/or the pre-product 2. The temperature sensor arrangement is not depicted and might comprise an optical temperature sensor allowing a visual determination of the temperature of the base layer 4 and/or the pre-product 2.

A required heat quantity depends on geometric characteristics of the pre-product 2 and/or the base layer 4. A thick pre-product 2 respectively base layer 4 might require a higher heat quantity than a thin pre-product 2 respectively base layer 4. This applies equally to the width and length of the pre-product 2 and base layer 4.

Furthermore, a thickness variation of the pre-product 2 and/or a variation of a surface structure of the pre-product 2 requires a varying heat input which allows a suitable heat input according to the given thickness of the pre-product 2. As a result, uniform heating is achieved without heating areas too much or too little.

The fiber arrangement of the pre-product 2 might lead to a varying thermal conductivity of the pre-product 2 and/or the base layer 4, which can be considered such that the pre-product 2 and/or the base layer 4 is heated sufficiently, but not too much either.

Furthermore, the position of the placement of the pre-product 2 onto the base layer 4 in relation to the final object can be considered. By doing so, edge effects at the beginning of each placement and at the end of each placement can be considered or not, in case such areas are removed at a later stage.

The support 3 is depicted having a round shape, which serves as basis for the first layer of pre-product 2. In other, not depicted embodiments, the support 3 has an elliptic and/or rotationally symmetric outer shape which might vary along the extent of the support 3. In another not depicted embodiment, the support is essentially flat. All embodiments have in common, that the support 3 defines at least part of a geometry of the object.

A material forming the support 3 is selected from a group consisting of metal, in particular steel, stainless steel, aluminum, polymer, in particular polyethylene (PE), polyamide (PA), polycarbonate (PC), polypropylene (PP), polyether ether ketone (PEEK), polyphenylene sulfide (PPS), polybutylene succinate (PBS) and combinations thereof. In case the material forming the support 3 matches the one of the polymers, the support 3 can form part of the base layer 4.

Depending on the desired characteristics of the finished object, the support 3 becomes at least partly part of the base layer 4 or can be retrieved for manufacturing further objects.

The placing unit 6 places a first layer of pre-product 2 directly on the support 3. To do so, the discharge unit 8 provides the pre-product 2 to the placing unit 6. The first layer forms the base layer 4, when the first layer of pre-product 2 is provided to the support 3. In a subsequent step, a second layer of pre-product 2 is applied to the base layer 4. To do so, the pre-product 2 is provided from the discharge unit 8 to the placing unit 6. The placing unit 6 places the pre-product 2 onto the base layer 4, while or after the heating device 5 heats at least the mating area of the base layer 4 and/or the mating area of the pre-product 2 to a melting temperature. To do so, the heating device 5 heats the base layer 4 and/or the pre-product 2 at least before the pre-product 2 and the base layer 4 meet. Further, heat can also be introduced into the meeting point of the base layer 4 and the pre-product 2. The applied pre-product 2 forms the second layer, which becomes at least partly part of the base layer 4.

The melting temperature depends on the material of the base layer 4 and on the pre-product 2 used, wherein the melting temperature relates to a temperature at which the pre-product and the base layer can be bonded, in particular welded. In general, this melting temperature relates to a melting temperature range of the used polymer and/or is above said temperature (i.e. a temperature in the melting range of the polymer or above).

In order to add a third layer to the base layer 4, the pre-product 2 is supplied by the discharge unit 7 and provided to the placing unit 6. The heating device 5 heats at least one of the mating areas of the pre-product 2 and the base layer 4 to a melting temperature. At least a part of the pre-product 2 and the base layer 4 meet to attain a bond between the base layer 4 and the pre-product 2. Following the placement of the pre-product 2, the newly applied pre-product 2 and the base layer 4 are solidified to form a monolithic object. In the present embodiment, the solidification is assisted by the consolidation wheel 9 presses the newly applied pre-product 2 to the base layer 4. The newly applied pre-product 2 forms the third layer, which becomes part of the base layer 4.

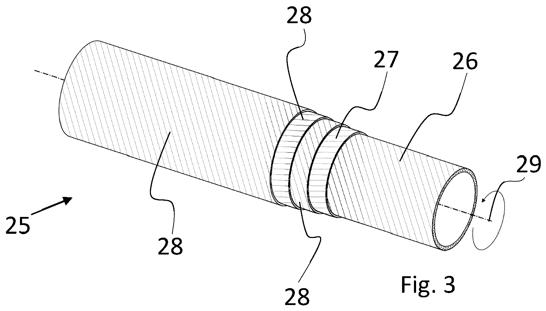

Fig. 3 shows a schematic structure of an object 25 produced by the above disclosed method. The object 25 comprises several layers, having a first layer 26 a second layer 27 and several third layers 28. The orientation of the individual layers 26, 27, 28 is shown by their hatching. The orientation of the layers 26, 27, 28, is chosen according to the expected load provided to the object 25. Some layers 27, 28 are wound from right to left and other layers 26, 28 from left to right. The layers 26, 27, 28 are wound about a rotational axis 29. The combination of bonded layers 26, 27, 28 serves as basis for applying further layers. In the present embodiment, in case an additional third layer (not depicted) shall be provided, all depicted layers 26, 27, 28 from the base layer for the new third layer. The object 25 is rotational symmetrical about an axis 29, whereby this form is only shown as an example.

An object being manufactured according to the above method respectively by the above described device is for example a tube for gas and fluid transport, a can for electric pumps, a drive shaft, a pneumatic or hydraulic cylinder, a hydraulic cylinder, and/or a pressure tank. This list is not exhaustive.

Direction-dependent mechanical characteristics of the object 25 can be controlled by the placement angle and choice of material. Further, the object 25 can be formed medium-impermeable.

The above described method allows to manufacture the object 25 in a cost-effective manner.

### List of reference signs

- 1: device
- 2: pre-product
- 3: support
- 4: base layer
- 5: heating device
- 6: placing unit
- 7: consolidation unit
- 8: discharge unit
- 9: consolidation wheel
- 10: laser generator
- 11: laser beam
- 12: optics
- 20: LED arrangement
- 21: first LED array
- 22: second LED array
- 23: first radiation zone
- 24: second radiation zone
- 25: object
- 26: first layer
- 27: second layer
- 28: third layer
- 29: axis

## Claims

1. Method of manufacturing an object from at least one pre-product (2) comprising at least one polymer and at least one fiber arrangement, wherein the pre-product (2) is provided in form of a tape, sheet or ribbon,
the method comprising
a) placing a first layer of pre-product (2) on a support (3), forming a base layer (4),
b) placing a second layer of pre-product (2) onto the base layer (4), such that the second layer at least partially overlaps with the first layer,
c) introducing heat, such that at least a portion of the polymer(s) of the first layer and/or of the second layer melts at least before the first and the second layer meet,
d) pressing the applied second layer to the first layer, optionally, by means of a consolidation unit (7), and solidifying the applied second layer to the first layer, becoming a part of the base layer (4),
e) optionally,
e1) placing a third layer of pre-product (2) onto the base layer (4), wherein the third layer overlaps the first layer and/or the second layer and/or the base layer (4),
e2) introducing heat, such that at least a portion of the polymer(s) of the base layer (4) and/or the third layer melts at least before the base layer (4) and the third layer meet,
e3) pressing the applied third layer to the base layer (4), optionally, by means of a consolidation unit (7), and solidifying the applied third layer to the base layer (4), becoming a part of the base layer (4),
e4) repeating steps e1) and e3) for one or more further layers,
**characterized in that,** the heat input is provided by an LED arrangement (20).

2. Method according to claim 1, wherein the LED-arrangement (20) heats the base layer (4) in a radiation zone (23, 24) corresponding to the placement of the third layer of pre-product (2), and/or wherein the LED-arrangement (20) heats the pre-product (2).

3. Method according to claim 1 or 2, wherein the LED-arrangement (20) is equipped with LEDs and controlled according to properties of the pre-product (2) and/or base layer (4), in particular according to (light-) absorption characteristics of base layer (4) and/or pre-product (2), thickness of base layer (4) and/or pre-product (2), width of base layer (4) and/or pre-product (2), and/or temperatures of base layer (4) and/or pre-product (2).

4. Method according to one of claims 1 to 3, wherein the polymer is selected from a group consisting of polyethylene (PE), polyamide (PA), polycarbonate (PC), polypropylene (PP), polyether ether ketone (PEEK), polyphenylene sulfide(PPS), polybutylene succinate (PBS) and combinations thereof, and/or the fiber arrangement comprises fibers selected from a group consisting of glass fibers, carbon fibers and/or polymer fibers, wherein optionally the plurality of fibers is oriented in a longitudinal direction within the pre-product (2).

5. Method according to any one of claims 1 to 4, wherein a controller controls the LED-arrangement (20) and/or at least one of the LEDs.

6. Device (1) configured to laminate at least one pre-product (2) onto a support (3) and/or to a base layer (4), wherein the base layer (4) is formed of laminated pre-product (2), wherein
the at least one pre-product (2) comprises at least one polymer and at least one fiber arrangement, wherein
the device (1) comprises a support (3), a heating device (5), a placing unit (6) having an optional consolidation unit (7), and a discharge unit (8) configured to provide the at least one pre-product (2), wherein
at least the heating device (5) is displaceable relative to the support (3),
**characterized in that,**
the heating device (5) comprises an LED-arrangement (20) wherein the LED-arrangement (20) is formed of at least one light emitting diode (LED), wherein the at least one LED is configured to provide a heat input to a radiation zone (23, 24), and wherein the radiation zone (23, 24) is provided at the pre-product (2) and/or the base layer (4) when the device (1) is in operation.

7. Device (1) according to claim 6, wherein the LED-arrangement (20) is formed of at least one LED array, wherein optionally the LED-arrangement (20) is form of at least a first and a second LED-array (21, 22), wherein the at least first and second LED-array (21, 22) are separated from each other, wherein the first LED-array (21) comprises a first radiation zone (23) configure to interact with the pre-product (2), wherein the second LED-array (22) is configured to interact with the base layer (4).

8. Device (1) according to any claim 6 or 7, wherein each of the at least one LED and/or LED array (21, 22) is individually controllable.

9. Device (1) according to any one of claims 6 to 8, wherein the radiation zone (23, 24) has a radiation width and a radiation length, wherein the radiation width and the radiation length are perpendicular to each other, wherein the radiation width is ± 50%, preferably ± 25%, preferably ± 15%, preferably ± 5%, preferably ± 2,5%, preferably ± 1% of the width of the pre-product (2), and/or wherein the radiation length is at least 10% of the radiation width, preferably at least 20% of the radiation width, preferably at least 50% of the radiation, preferably at least 100% of the radiation, preferably at least 200% of the radiation width, preferably at least 1000% of the radiation width.

10. Device (1) according to any one of claims 6 to 9, wherein the LED-arrangement (20) and/or at least one of the LED-arrays (21, 22) is exchangeable.

11. Device (1) according to any one of claims 6 to 10, wherein the LED-arrangement (20) has at least one wavelength or wavelength range, wherein the LED-arrangement (20) in particular its wavelength or wavelength range is matched according to an absorption spectrum of the pre-product (2) and/or base layer (4), in particular to the absorption spectrum of the polymer and/or of the fiber arrangement.

12. Device (1) according to any one of claims 6 to 11, wherein the device comprises a controller being configured to control the LED-arrangement (20) and/or at least one of the LED-arrays (21, 22) and/or each of the at least one LED.

13. Device (1) according to any one of claims 6 to 12, wherein the consolidation unit (7) comprises a consolidation element (9).

14. An object, optionally produced according to the method of one of claims 1 to 5,
wherein the object is a tube for gas and fluid transport optionally for pressurized conditions, and/or a can for electric pumps, and/or a drive shaft, and/or a pneumatic cylinder, and/or a hydraulic cylinder, and/or a pressure tank.
